# FASCICULE DE BREVET EUROPEEN

(11) **EP 1 333 560 B1**
(45) Date de publication et mention de la délivrance du brevet: **24.08.2005**
(21) Numéro de dépôt: 03290105.0
(22) Date de dépôt: 15.01.2003
(51) Int. Cl.: H02K 9/06, H02K 9/12, H02K 5/14

(54) **Machine tournante électrique**
Rotierende elektrische Maschine
Rotating electric machine

(30) Priorité: 18.01.2002 FR 0200620
(43) Date de publication de la demande: 06.08.2003
(73) Titulaire: MOTEURS LEROY-SOMER, 16015 Angouleme Cédex (FR)
(72) Inventeur: Duong, Hong-Hai, 90100 Joncherey (FR)
(74) Mandataire: Tanty, François

(56) Documents cités:
- DE-C- 840 635
- US-A- 3 184 625
- US-A- 3 558 942
- US-A- 5 296 772
- US-B1- 6 218 747

## Description

La présente invention concerne une machine électrique tournante, et plus particulièrement mais non exclusivement, une génératrice comportant un rotor bobiné, ce rotor étant alimenté en électricité grâce à une pluralité de pistes conductrices sur lesquelles viennent frotter contacts, stationnaires tels que des charbons.

L'invention concerne une machine dans laquelle un ventilateur, solidaire du rotor, tourne avec celui-ci dans un carter.

Le brevet US 3 134 625 décrit une machine comportant un arbre avec des perçages dans lesquels s'étendent des câbles électriques.

Le brevet US 3 358 942 décrit un moteur avec des moyens de refroidissement, de l'air comprimé étant dirigé dans des canaux s'étendant à la circonférence du rotor.

Il peut s'avérer utile, pour faciliter la maintenance par exemple, de réaliser les pistes conductrices sur un organe amovible, capable d'être fixé sur le rotor, cet organe étant configuré de manière à coopérer avec des connecteurs électriques présents sur le rotor. Ces connecteurs électriques peuvent être disposés chacun avec un jeu dans un support isolant, et présenter une certaine mobilité par rapport au support afin de permettre une dilatation sous l'effet de la température des différentes pièces constituant la machine.

Il existe un besoin pour améliorer encore le fonctionnement d'une telle machine, et plus particulièrement sa fiabilité électrique.

L'invention y parvient grâce au fait que le rotor comporte au moins un élément d'étanchéité apte à empêcher un passage d'air par le jeu existant entre au moins l'un des connecteurs et le support, sous l'effet de la dépression créée par le ventilateur.

Grâce à l'invention, les particules de carbone ou autres poussières conductrices produites par le frottement des charbons sur les pistes conductrices précitées ne sont pas entraînées dans le jeu existant entre les connecteurs et le support isolant, sous l'effet du courant d'air généré par le ventilateur, et ne risquent donc pas de détériorer l'isolation électrique, notamment lorsque la tension d'alimentation du rotor est élevée, ce qui est le cas par exemple lorsque la machine est une génératrice pour éolienne, de puissance élevée, par exemple de l'ordre du MW ou plus.

Dans une réalisation particulière, le support comporte une pluralité de gorges annulaires associées chacune à un connecteur, et un joint annulaire, par exemple torique, est placé dans chaque gorge, ce joint étant apte à s'appliquer sur le connecteur correspondant. Un tel joint n'entrave pas la possibilité pour chaque connecteur de se déplacer par rapport au support isolant, notamment sur une course inférieure ou égale à 2 mm, par exemple de l'ordre de 1 mm, tout en empêchant à l'air de s'engouffrer dans le jeu existant entre le connecteur et le support.

Les pistes conductrices peuvent être réalisées sur un organe tel qu'une bague, rapporté sur le rotor et être au nombre de six, par exemple.

Chaque connecteur peut être fixé à une extrémité d'un câble électrique relié à au moins un bobinage du rotor. Un tel câble peut être engagé dans un tube isolant, ce tube étant inséré dans un passage de l'arbre. Un joint annulaire supplémentaire, par exemple torique, peut être engagé sur chaque tube isolant pour empêcher une circulation d'air par le jeu existant entre le tube et le passage correspondant réalisé dans l'arbre du rotor.

L'invention s'applique non seulement à la fabrication de nouvelles machines électriques tournantes telles que des génératrices, mais s'applique également à l'amélioration des machines existantes, grâce à un procédé comportant l'étape suivante :
- remplacer un support isolant, dans lequel une pluralité de connecteurs est disposée, chacun avec un jeu, par un support configuré pour recevoir au moins un élément d'étanchéité apte à empêcher une circulation d'air par ledit jeu, sous l'effet de la dépression créée par le ventilateur.

L'invention pourra être mieux comprise à la lecture de la description détaillée qui va suivre, d'exemples de mises en oeuvre non limitatifs, et à l'examen du dessin annexé, sur lequel :
- la figure 1 représente, de manière schématique et partielle, en coupe axiale, une machine électrique tournante à laquelle l'invention peut s'appliquer,
- la figure 2 représente isolément, en coupe axiale et de manière schématique, un connecteur, et
- la figure 3 représente, de manière schématique et en coupe axiale, une variante de réalisation des moyens d'étanchéité.

Dans toute la description qui suit, y compris les revendications, l'expression « comportant un » doit être comprise comme étant synonyme de « comportant au moins un », sauf si le contraire est spécifié.

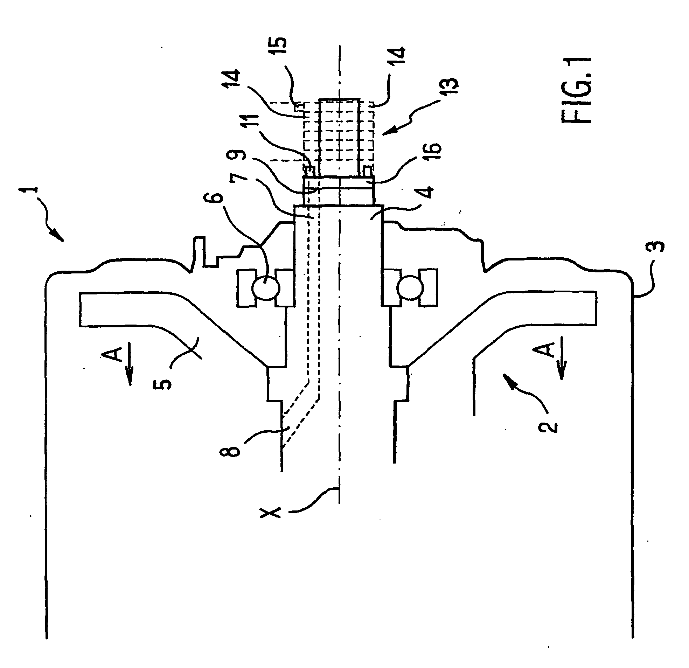

La machine électrique 1 représentée schématiquement et partiellement à la figure 1 comporte un rotor 2 tournant à l'intérieur d'un stator, non représenté, contenu dans un carter 3.

Le rotor 2 comporte un arbre 4 en acier, d'axe X, sur lequel est fixé un ventilateur 5 permettant de souffler de l'air à l'intérieur du carter 3, comme illustré par les flèches A, pour refroidir la machine.

L'arbre 4 tourne sur des roulements 6 à chaque extrémité axiale de la machine.

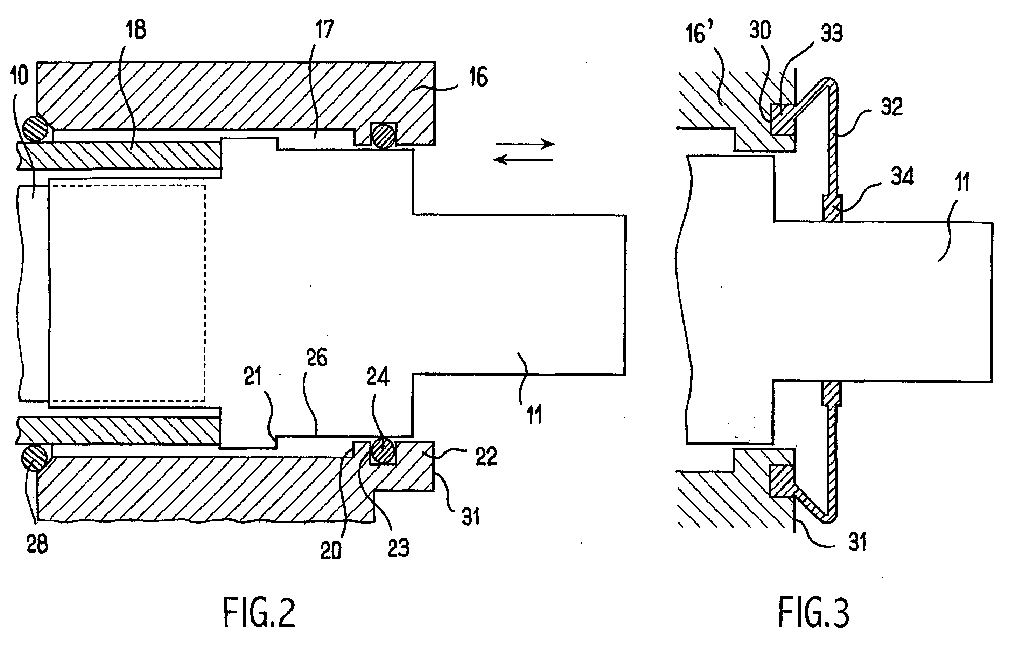

Pour alimenter électriquement les bobinages du rotor, non représentés, des passages 7 sont réalisés dans l'arbre 4, ces passages 7 débouchant à une extrémité 8 à l'intérieur du carter 3 et à une autre extrémité 9 sur un épaulement annulaire de l'arbre 4 à l'extérieur de la machine. Un câble électrique 10, partiellement représenté sur la figure 2, est placé dans chaque passage 7, ce câble 10 étant relié à une extrémité à un bobinage du rotor et à l'autre extrémité à un connecteur 11.

Les connecteurs 11 permettent de raccorder électriquement le rotor 2 avec un organe tel qu'une bague 13, fixé en bout d'arbre et comportant des pistes conductrices annulaires 14 sur lesquelles peuvent venir frotter des charbons 15, comme illustré de manière très schématique sur la figure 1. Chaque piste conductrice 14 est reliée électriquement avec un connecteur 11 correspondant.

Les connecteurs 11 sont engagés dans un support isolant 16, fixé contre l'épaulement de l'arbre 4 sur lequel les passages 7 débouchent par les extrémités 9.

Le support 16 est traversé par des lumières 17, comme on peut le voir sur la figure 2. Des tubes isolants 18 sont disposés autour des câbles 10 à l'intérieur des passages 7 et les connecteurs 11 s'emmanchent dans une extrémité de ces tubes isolants 18. Chaque connecteur 11 est monté avec un jeu radial non nul dans la lumière 17 correspondante, et chaque connecteur 11 peut se déplacer axialement, par rapport au support 16, sur une course suffisante pour permettre une libre dilatation des pièces de la machine 1, cette course étant par exemple de l'ordre de 1 mm.

Dans l'exemple illustré, chaque lumière 17 présente un épaulement 20 faisant face à un épaulement 21 du connecteur 11 correspondant.

L'épaulement 20 délimite axialement avec la face frontale extérieure 31 du support 16, une partie 22 de plus faible diamètre, dans laquelle est réalisée une gorge annulaire 23 destinée à loger un joint torique 24, ce dernier pouvant s'appliquer d'une manière sensiblement étanche sur une surface 26, cylindrique de révolution, du connecteur 11. Ainsi, le joint 24 empêche que de l'air ne soit aspiré dans la lumière 17 sous l'effet de la dépression créée par le ventilateur 5 à l'intérieur de la machine durant le fonctionnement de celle-ci. Cet air serait susceptible sinon d'entraîner avec lui des poussières conductrices pouvant nuire à l'isolation électrique. Ainsi, le risque de court-circuit pendant le fonctionnement de la machine, notamment lorsque la tension d'alimentation du rotor est élevée, est diminué.

On peut remarquer à l'examen de la figure 2 qu'un joint supplémentaire 28, par exemple torique, peut être engagé sur chaque tube isolant 18, ce joint 28 venant s'appliquer d'une part contre une surface de l'arbre 4 et d'autre part contre un chanfrein du support 16 pour empêcher que de l'air ne circule par le jeu existant autour des tubes 18 dans les passages 7.

Bien entendu, l'invention n'est pas limitée à une manière particulière de réaliser l'étanchéité et d'autres types d'éléments d'étanchéité, en élastomère ou non, peuvent être utilisés.

A titre d'exemple, on a représenté sur la figure 3 un connecteur 11 tel que décrit précédemment et un support 16' qui diffère du précédent par l'absence des gorges annulaires 23, remplacées par des gorges 30 sur la face frontale extérieure 31. Les gorges 30 servent au montage de garnitures d'étanchéité 32 ayant chacune une première partie d'extrémité 33 fixée dans la gorge 30 correspondante, et une deuxième partie d'extrémité 34 s'appliquant étroitement sur le connecteur 11. La garniture 32 peut être réalisée en élastomère ou dans d'autres matériaux, étant suffisamment souple pour pouvoir se déformer afin d'accompagner le déplacement du connecteur 11 relativement au support 16'.

L'invention n'est pas limitée aux exemples de réalisation qui viennent d'être décrits.

En particulier, on pourra utiliser non pas plusieurs éléments d'étanchéité distincts associés chacun à un connecteur mais un élément d'étanchéité commun à l'ensemble des connecteurs, comportant par exemple des trous pour le passage des connecteurs.

## Revendications

1. Machine électrique tournante (1), comportant
- un rotor (2) bobiné,
- un ventilateur (5) tournant avec le rotor dans un carter (3),
- une pluralité de connecteurs électriques (11),
- au moins un support (16 ; 16') isolant, au moins un connecteur électrique (11) étant mobile par rapport au support (16, 16') et disposé avec un jeu dans celui-ci,
machine **caractérisée par le fait que** le rotor comporte au moins un élément d'étanchéité (24 ; 32) apte à empêcher un passage d'air par le jeu existant entre le connecteur (11) et le support (16, 16'), sous l'effet de la dépression créée par le ventilateur (5).

2. Machine selon la revendication 1, **caractérisée par le fait que** le support (16, 16') comporte une pluralité de gorges annulaires (23) associées chacune à un connecteur (11), et **par le fait qu'**un joint annulaire (24) est placé dans chaque gorge (23), ce joint (24) étant apte à s'appliquer sur le connecteur (11) correspondant.

3. Machine selon la revendication 2, **caractérisée par le fait que** le joint (24) est torique.

4. Machine selon la revendication 1, **caractérisée par le fait que** l'élément d'étanchéité (24, 32) comporte une partie (33) au contact du support isolant (16') et une partie (34) au contact du connecteur (11), et entre les deux au moins une partie déformable.

5. Machine selon l'une quelconque des revendications précédentes, **caractérisée par le fait que** les connecteurs (11) sont destinés à être reliés à des pistes annulaires conductrices (14) sur lesquelles frottent des charbons (15).

6. Machine selon l'une quelconque des revendications précédentes, **caractérisée par le fait que** chaque connecteur (11) est fixé à une extrémité d'un câble électrique (10) relié à au moins un bobinage du rotor.

7. Machine selon la revendication 6, **caractérisée par le fait que** chaque câble (10) est engagé dans un tube isolant (18), ce tube étant inséré dans un passage (7) de l'arbre (4).

8. Machine selon la revendication 7, **caractérisée par le fait qu'**un joint annulaire supplémentaire (28) est engagé sur chaque tube isolant (18) pour empêcher une circulation d'air par le jeu existant entre le tube (18) et le passage correspondant (7) dans l'arbre (4) du rotor.

9. Machine selon la revendication 8, **caractérisée par le fait que** le joint supplémentaire est un joint torique (28).

10. Procédé de fabrication d'une machine telle que définie dans l'une quelconque des revendications précédentes, comportant l'étape suivante :
- remplacer un support isolant dans lequel une pluralité de connecteurs (11) est disposée, chacun avec un jeu, par un support (16 ; 16') isolant par ailleurs configuré pour recevoir au moins un élément d'étanchéité (24 ; 32) apte à empêcher une circulation d'air par le jeu entre chaque connecteur (11) et le support (16, 16'), sous l'effet d'une dépression créée par le ventilateur (5).

## Patentansprüche

1. Drehende elektrische Maschine (1), bestehend aus:
- einem gewickelten Rotor (2),
- einem Ventilator (5), der sich mit dem Rotor in einem Gehäuse (3) dreht,
- mehreren elektrischen Steckverbindern (11),
- mindestens einem isolierenden Träger (16, 16'), wobei mindestens einer der elektrischen Steckverbinder (11) gegenüber dem Träger (16, 16') beweglich ist und in diesem mit Spiel angebracht ist,
wobei diese Maschine **dadurch gekennzeichnet ist, dass** der Rotor mindestens ein Dichtungselement (24, 32) umfasst, welches dazu geeignet ist, den Durchzug von Luft durch das zwischen dem Steckverbinder (11) und dem Träger (16, 16') vorhandene Spiel unter der Einwirkung des durch den Ventilator (5) herbeigeführten Unterdrucks zu verhindern.

2. Maschine nach Anspruch 1, **dadurch gekennzeichnet, dass** der Träger (16, 16') mehrere Ringnuten (23) aufweist, die jeweils einem Steckverbinder (11) zugeordnet sind, sowie **dadurch gekennzeichnet, dass** eine Ringdichtung (24) in jeder Nute (23) liegt, wobei diese Dichtung (24) auf den entsprechenden Steckverbinder (11) angesetzt werden kann.

3. Maschine nach Anspruch 2, **dadurch gekennzeichnet, dass** die Dichtung (24) ein Runddichtring ist.

4. Maschine nach Anspruch 1, **dadurch gekennzeichnet, dass** das Dichtungselement (24, 32) einen Teil (33) umfasst, welcher in Berührung mit dem isolierenden Träger (16') ist, sowie einen Teil (34), welcher den Steckverbinder (11) berührt, und zwischen diesen Teilen mindestens einen verformbaren Teil aufweist.

5. Maschine nach einem der vorangegangenen Ansprüche, **dadurch gekennzeichnet, dass** die Steckverbinder (11) dazu gedacht sind, mit ringförmigen Leiterbahnen (14) verbunden zu werden, gegen welche Kohlebürsten (15) reiben.

6. Maschine nach einem der vorangegangenen Ansprüche, **dadurch gekennzeichnet, dass** jeder Steckverbinder (11) am Ende eines elektrischen Kabels (10) angebracht ist, welches mit mindestens einem der Wickel des Rotors verbunden ist.

7. Maschine nach Anspruch 6, **dadurch gekennzeichnet, dass** jedes Kabel (10) in einem Isolierrohr (18) liegt, wobei dieses Rohr in einen Kanal (7) in der Welle (4) eingeführt ist.

8. Maschine nach Anspruch 7, **dadurch gekennzeichnet, dass** eine zusätzliche Ringdichtung (28) auf jedem Isolierrohr (18) angebracht ist, um einen Luftstrom durch das Spiel zwischen dem Rohr (18) und dem entsprechenden Kanal (7) in der Welle (4) des Rotors zu verhindern.

9. Maschine nach Anspruch 8, **dadurch gekennzeichnet, dass** die zusätzliche Ringdichtung ein Runddichtring (28) ist.

10. Verfahren zur Herstellung einer Maschine nach einem der vorangegangenen Ansprüche, welches folgenden Schritt beinhaltet:
- Ersetzen eines isolierenden Trägers, in dem mehrere Steckverbinder (11) jeweils mit Spiel angeordnet sind, durch einen Träger (16, 16'), im übrigen auch isolierend, welcher dazu ausgelegt ist, mindestens ein Dichtungselement (24, 32) aufzunehmen, das geeignet ist, einen Luftstrom durch das Spiel zwischen jedem Verbindungsstecker (11) und dem Träger (16, 16') unter Einwirkung des vom Ventilator (5) herbeigeführten Unterdrucks zu verhindern.

## Claims

1. Rotating electrical machine (1), comprising:
- a wound rotor (2),
- a fan (5) rotating with the rotor in a housing (3),
- a multiplicity of electrical connectors (11),
- at least one insulating support (16; 16'), at least one electrical connector (11) being mobile in relation to the support (16; 16') and arranged therein with play,
which machine is **characterised in that** the rotor comprises at least one sealing element (24; 32) able to prevent a passage of air via the play existing between the connector (11) and the support (16; 16') under the effect of the pressure reduction created by the fan (5).

2. Machine according to claim 1, **characterised in that** the support (16; 16') comprises a plurality of annular grooves (23) each associated with a connector (11) and **in that** an annular seal (24) is placed in each groove (23), this seal (24) being able to be applied to the corresponding connector (11).

3. Machine according to claim 2, **characterised in that** the seal (24) is an O-ring seal.

4. Machine according to claim 1, **characterised in that** the sealing element (24; 32) comprises a portion (33) in contact with the insulating support (16') and a portion (34) in contact with the connector (11) and between the two at least one deformable portion.

5. Machine according to any of the previous claims, **characterised in that** the connectors (11) are intended to be linked to annular conductive tracks (14) on which rub carbon brushes (15).

6. Machine according to any of the previous claims, **characterised in that** each connector (11) is fixed to one end of an electric cable (10) linked to at least one rotor winding.

7. Machine according to claim 6, **characterised in that** each cable (10) is engaged in an insulating tube (18), this tube being inserted in a passage (7) in the shaft (4).

8. Machine according to claim 7, **characterised in that** an additional annular seal (28) is engaged on each insulating tube (18) to prevent a circulation of air via the play existing between the tube (18) and the corresponding passage (7) in the rotor shaft (4).

9. Machine according to claim 8, **characterised in that** the additional seal is an O-ring seal (28).

10. Method for production of a machine as defined in any one of the previous claims, comprising the following stage:
- replacement of an insulating support in which is arranged a plurality of connectors (11) each with play, by an insulating support (16; 16') also configured to receive at least one sealing element (24; 32) able to prevent a circulation of air via the play between each connector (11) and the support (16; 16') under the effect of a pressure reduction created by the fan (5).
